# EUROPEAN PATENT SPECIFICATION

(11) **EP 3 354 147 B1**
(45) Date of publication and mention of the grant of the patent: **26.02.2020**
(21) Application number: 16885277.0
(22) Date of filing: 30.11.2016
(51) Int. Cl.: A42B 1/06, A42B 1/24, A61F 9/02

(54) **PROTECTIVE GEAR AND METHOD OF PRODUCING PROTECTIVE GEAR**
SCHUTZKLEIDUNG UND VERFAHREN ZUR HERSTELLUNG VON SCHUTZKLEIDUNG
DISPOSITIF DE PROTECTION ET PROCÉDÉ DE FABRICATION D'UN DISPOSITIF DE PROTECTION

(30) Priority: 14.01.2016 RU 2016101006
(43) Date of publication of application: 01.08.2018
(73) Proprietor: Grebennikov, Viktor Mikhajjlovich, Moscow 121357 (RU)
(72) Inventor: Grebennikov, Viktor Mikhajjlovich, Moscow 121357 (RU)
(74) Representative: Kormos, Ágnes
(86) International application number: PCT/RU2016/000835
(87) International publication number: WO 2017/123116

(56) References cited:
- RU-C2- 2 233 584
- SU-A1- 120 649
- US-A- 766 426
- US-A- 3 823 418
- US-A- 5 025 507
- US-A- 6 049 904
- US-A1- 2006 005 300
- US-B1- 6 298 492
- US-B1- 6 298 492

## Description

### Specification of Invention

The invention relates to producing a protective gear and may be commonly used by professionals performing various outdoor works in summer, in particular, during grass mowing. It is also suitable for ordinary people suffering from allergies to poplar fluff or dandelion fluff.

Known [http://oregon-online.ru/specodezhda-dlya-lesorubov/prof-sredstva-zashity-lesoruba-oregon/schitok-iz-polikarbonada-oregon-515063/] is a Face shield Oregon 515063 made from polycarbonate. The Oregon shield is designed to protect the face and protects the eyes, forehead, and face during non-life threatening operations. It is normally used during grass mowing with electrically and gasoline powered grass trimmers, however, it may also be used during plant thinning. The design includes a visor to reliably cover the forehead portion of the face to protect it against impingement of foreign matter from above. A Stanrart headband provides for single-point stepped size adjustment. Based on a manufacturing material, there may be two options of the protective shields. One disadvantage of the prior art device is that exhaled warm and humid air, whose temperature may be rather low at the north latitudes in summer, condenses at the faceshield. Furthermore, the device is technically complex to manufacture and heavy for a user (has a heavy weight). Further, this protective gear neither protects ears, nor neck, of the user, while, during grass mowing, particles occasionally fly off external objects onto the neck and ears, such as, during grass mowing near a fence. Neither it is suitable for ordinary people suffering from allergies to poplar fluff or dandelion fluff due to potential fluff ingress through the shield's apertures into one's nose and mouth.

Also known is the Husqvarna 5056653-58 hearing protector with mesh visor http://serpimolot.ru/index.php?productlD=14161], published: 17.11.2011, configured to include a hearing protector, a headgear attached thereto, and a mesh visor.

One disadvantage of the prior art device is that prolonged work, when one is has to look through a mesh visor, is tiring to one's eyes. The eyes get tired as little as after an hour of working with such a face shield. Furthermore, the device is technically complex to manufacture and heavy for a user (has a heavy weight). Further, this protective gear neither protects ears, nor neck, of the user, while, during grass mowing, particles occasionally fly off external objects onto the neck and ears, such as, during grass mowing near a fence. Neither it is suitable for ordinary people suffering from allergies to poplar fluff or dandelion fluff due to potential fluff ingress through the shield's apertures into one's nose and mouth.

US 766,426 discloses a netting in the form of a hood. Openings are provided in the netting in the eye region, rings are located in these openings, to which the frame of a pair of spectacles may be attached.

US 6,298,492 discloses a net hood with an eye cover frame, resilient hooks are provided on the frame to receive the frame of a pair of spectacles.

An object of the present invention is to address the issues inherent to the prior art.

The technical result consists in eliminating the obstruction to vision created by the mesh in the prior art. Further, reduced discomfort in using the protective gear is provided for, specifically, via: a reduced weight of the gear, small size of the gear, and ease of use. Furthermore, this protective gear protects the user's ears and neck, and is suitable for complete protection of all portions of the user's head and neck, and may also be used as a protective gear by ordinary people suffering from allergies to poplar fluff or dandelion fluff, protecting them against fluff ingress into one's nose and mouth.

The above technical result is accomplished by providing a method for producing a protective gear, wherein a mesh covering the entire facial portion of the head is used, wherein the mesh is shaped to enclose one's head entirely and is extended in length to cover the neck, at least one cutout is made in the mesh matching the shape of spectacle lenses, and the edge of the cutout is connected to an elastic material in which a recess is provided, the size of which is selected to be sufficient for the outer edge of a lens to be inserted therein.

Preferably, the elastic material is coupled to the mesh in the area of the recess, and the mesh edge is thickened.

Preferably, the elastic material of one hole is connected to the elastic material of the other hole, and the area of their connection is configured as a recess matching the shape of a nasal bridge.

Preferably, the elastic material is configured as a spectacle frame.

Preferably, the edge of the hole comprises multiple sewn through layers of material.

Preferably, the mesh is fixed on a bucket hat.

The device produced through the implementation of the method is a protective gear, comprising a mesh covering the entire facial portion of the head, wherein the mesh is shaped to enclose the entire head and has a length to cover the neck, at least one cutout is made in the mesh matching the shape of spectacle lenses, and the edge of the cutout is connected to an elastic material in which a recess is provided, the size of which is selected to be sufficient for the outer edge of a lens to be inserted therein.

Preferably, the elastic material is coupled to the mesh in the area of the recess, and the mesh edge is thickened.

Preferably, the elastic material of one hole is connected to the elastic material of the other hole, and the area of their connection is configured as a cavity matching the shape of a nasal bridge.

Preferably, the elastic material is configured as a spectacle frame.

Preferably, the edge of the hole comprises multiple sewn through layers of material.

Preferably, the mesh is fixed on a bucket hat.

### Brief Description of the Drawings

Fig. 1 shows an example embodiment of the method with a mesh on a bucket hat and two holes (where a is a view with a plate for holding on the nose, and b is a view without the nasal bridge plate).
Fig. 2 shows an example embodiment of the method with a conventional mesh without a bucket hat and with two holes (where a is a view with a plate for holding on the nose, and b is a view without the nasal bridge plate).
Fig. 3 shows an example coupling of the hole edges with the elastic material.
Fig. 4 shows an example coupling of the hole edges with the elastic material in the area of the cavity in the material.
Fig. 5 shows an example of the compactly folded protective gear of Fig.1.
Fig. 6 shows an example of the compactly folded protective gear of Fig.2.

### Detailed Description of the Invention

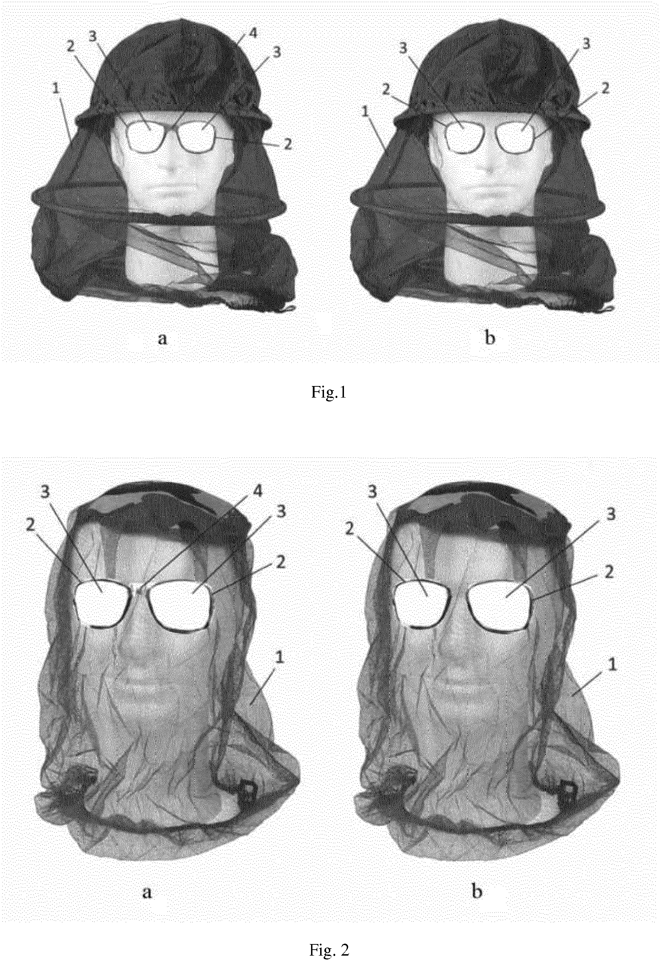

The invention is implemented through a method of producing a mesh as the primary means of protection. The mesh is produced from a fine or a coarse mesh 1 material from which portions of the mesh are cut out with the use of patterns, the portions comprising a complete mesh that may be put on one's head such that it covers the entire head and the neck. Fig. 1 shows an example embodiment of the method including a mesh on a bucket hat (where a is a view with a plate for holding on the nose, and b is a view without the nasal bridge plate), while Fig. 2 shows an example embodiment of the method including a conventional mesh without a bucket hat (where a is a view with a plate for holding on the nose, and b is a view without the nasal bridge plate).

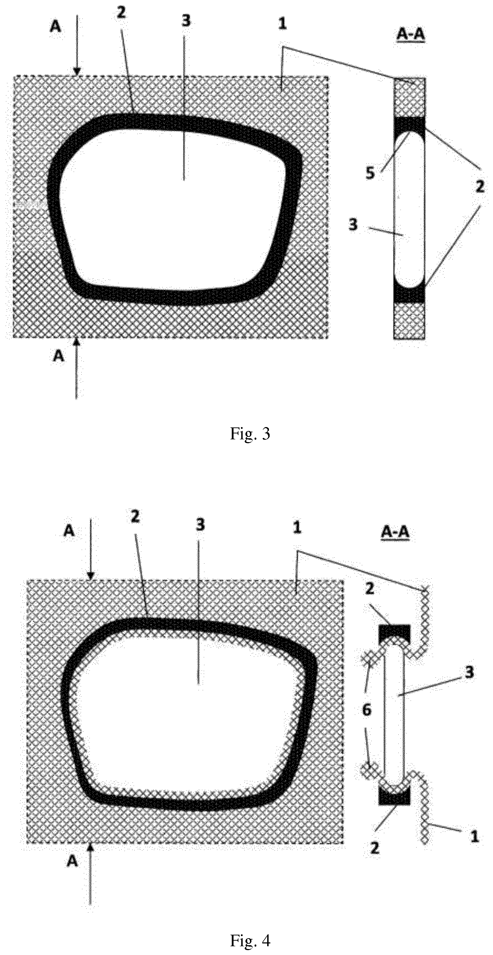

In this example, two cutouts are made in the facial portion of the mesh in the form of holes matching the shape of the spectacles lens 3, and the edges of the holes are coupled to an elastic material 2, where a cavity recess 5 is made (see Fig.3). The recesses 5 are sized to be sufficient to insert the side edge of the lens 3 into it, i.e. made such as to accommodate a side of the lens 3 into the recess 5 area.

Elastic material 2 may be coupled to the mesh 1, for example, in the recess 5 area, in which case the mesh 1 edge is configured with a thickening 6 to prevent the lens 3 from falling out (to provide the resting function) (see Fig.4).

Elastic material 2 of one hole may be connected to the elastic material of the other hole via an additional rest 4. The rest 4, as well as the connection area, is configured as a recess to match the nasal bridge shape. Where the mesh 1 is used, the rest 4 is used for holding on the nose, thus reducing the possibility of horizontal displacement of the mesh to the right or to the left and more firmly fixing it in the facial area.

The holes are sized and shaped such as to match the size and shape of the spectacles lens 3.

Due to the exact coincidence of the outer edge of the lens with the recess any penetration of insects under the mesh is eliminated.

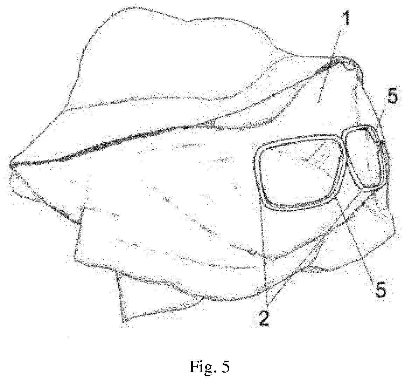

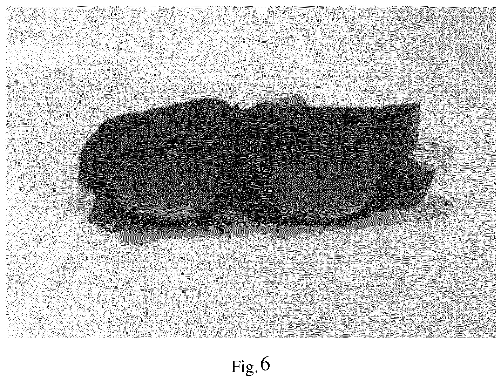

The invention enables producing a rather compact protective gear (see Fig 5, Fig.6).

An example use of the protective gear is as follows:
The user puts onto his/her head the mesh with the lenses inserted into the recesses of the elastic material in the area of the edge of the hole(s) in the mesh. The user then may proceed with his/her work, his/her face and other portions of his/her head being protected against the impact of small particles flying towards his/her head.

The protective gear produced by the present method may be used to reliably protect not only one's face, but also the neck and all portions of the head.

The mesh of the protective gear is an object to be put by the user onto his/her head; it may be part of protective clothing of a lawn-mower or a builder, and, as such, may be attached to a bucket hat, a builder's hard hat or other type of protective gear or clothing. The manufacturing shape of the patterns and the number of their parts may, therefore, vary based on the intended use, and are outside the scope of protection of this invention.

Transparent lens in the mesh according to this invention eliminate obstructions to vision, created by the mesh in the prior art device. The ease of use and the reduced weight of the protective gear reduce any discomfort during the use thereof. Furthermore, since this protective gear encloses the entire head and does not contain any apertures, it may be used by ordinary people suffering from allergies to poplar fluff or dandelion fluff to prevent the fluff ingress into one's nose and mouth.

Generally, by providing the hole(s) and the lens in the mesh, and the mesh being enclosed around the head and covering the neck, all the claimed technical results may be accomplished, the accomplishment essentially consisting in the absence of any gaps through which small particles, including insects, or fluff may reach any portion of one's head and the convenience of using the mesh owing to the lens that address the issue of tired eyes inherent to the prior art device.

## Claims

1. A method for producing a protective gear, in which a mesh (1) covering the entire facial portion of the head is used, the mesh (1) is shaped to enclose one's head entirely and is extended in length to cover the neck, at least one cutout is made in the mesh (1) matching the shape of spectacle lenses (3), **characterized in that** the edge of the cutout the mesh (1) is connected to an elastic material (2) in which a recess (5) is provided, the size of the recess (5) is selected to be sufficient for the outer edge of the lens (3) to be inserted therein.

2. The method of claim 1, **characterized in that** the elastic material (2) is coupled to the mesh (1) in the area of the recess (5), and the mesh (1) edge is thickened.

3. The method of claim 1, **characterized in that** the elastic material (2) of one cutout is connected to the elastic material (2) of the other cutout, and the area of their connection is configured as a cavity (4) matching the shape of a nasal bridge.

4. The method of claim 1, **characterized in that** the mesh (1) is fixed on a bucket hat.

5. Protective gear comprising a piece of mesh (1) shaped to enclose the entire head of a wearer and with a length to cover the neck of the wearer; at least one cutout in the mesh (1) matching the shape of a spectacle lens (3), **characterized by** further comprising an elastic material (2) connected along the edge of the cutout, the elastic material (2) comprising a recess (5), the size of which is selected to be sufficient for the outer edge of a lens (3) to be inserted therein.

6. Protective gear of claim 5, **characterized in that** the elastic material (2) is coupled to the mesh (1) in the area of the recess (5), and the mesh (1) edge is thickened.

7. Protective gear of claim 5, **characterized in that** the elastic material (2) of one cutout is connected to the elastic material (2) of the other cutout, and the area of their connection is configured as a cavity (4) matching the shape of a nasal bridge.

8. Protective gear of claim 5, **characterized in that** the mesh (1) is fixed on a bucket hat.

## Patentansprüche

1. Verfahren zur Herstellung der Schutzausrüstung mit einem den gesamten Gesichtsbereich des Kopfes abdeckenden Netz (1), das den Kopf vollständig umschließt und zur Deckung des Halses verlängert ist, wobei das Netz (1) mindestens ein Ausschnitt aufweist, der der Form von Brillengläsern (3) entspricht, **dadurch gekennzeichnet, dass** der Rand des Ausschnittes des Netzes (1) mit einem elastischen Material (2) gekoppelt ist, in dem eine Aussparung (5) mit der Größe vorgesehen ist, die ausreicht, um den äußeren Rand der Linse (3) darin einzusetzen.

2. Verfahren nach Anspruch 1, **dadurch gekennzeichnet, dass** das elastische Material (2) im Bereich der Aussparung (5) mit dem Netz (1) gekoppelt ist und die Kante des Netzes (1) verdickt ist.

3. Verfahren nach Anspruch 1, **dadurch gekennzeichnet, dass** das elastische Material (2) eines Ausschnitts mit dem elastischen Material (2) eines anderen Ausschnitts gekoppelt ist und der Bereich deren Kopplung als einen Hohlraum (4) konfiguriert ist, der der Form vom Nasenbrücken entspricht.

4. Verfahren nach Anspruch 1, **dadurch gekennzeichnet, dass** das Netz (1) auf einen Panamahut befestigt ist.

5. Schutzausrüstung, die einen Netzstück
(1) aufweist, der den Kopf des Trägers vollständig umschließt und zur Deckung des Halses des Trägers verlängert ist; wobei das Netz (1) mindestens ein Ausschnitt aufweist, der der Form von Brillengläsern (3) entspricht, ferner umfassend ein elastisches Material (2), das entlang des Randes des Ausschnitts gekoppelt ist, wobei das elastische Material (2) eine Aussparung (5) umfasst, deren Größe ausreichend ist, um den äußeren Rand der Linse (3) darin einzusetzen.

6. Schutzausrüstung nach Anspruch 5, **dadurch gekennzeichnet, dass** das elastische Material (2) im Bereich der Aussparung (5) mit dem Netz (1) gekoppelt ist und der Rand des Netzes (1) verdickt ist.

7. Schutzausrüstung nach Anspruch 5, **dadurch gekennzeichnet, dass** das elastische Material (2) eines Ausschnitts mit dem elastischen Material (2) eines anderen Ausschnitts gekoppelt ist, und der Bereich deren Kopplung als einen Hohlraum (4) konfiguriert ist, der der Form vom Nasenbrücken entspricht.

8. Schutzausrüstung nach Anspruch **5, dadurch gekennzeichnet, dass** das Netz (1) auf einen Panamahut befestigt ist.

## Revendications

1. Procédé de fabrication d'un équipement de protection qui utilise un filet (1) recouvrant toute la partie faciale de la tête ; le filet (1) est conçu pour entourer entièrement la tête et est étendu en longueur pour couvrir le cou ; au moins une découpe est réalisée dans le filet (1) sous la forme des lentilles de lunettes (3), **caractérisé en ce que** le bord de la découpe du filet (1) est relié à un matériau élastique (2) dans lequel on réalise un évidement (5) dont les dimensions doivent être suffisantes pour y insérer le bord extérieur de la lentille (3).

2. Procédé selon la revendication 1, **caractérisé en ce que** le matériau élastique (2) est couplé avec le filet (1) dans la zone de l'évidement (5), et le bord du filet (1) s'est épaissi.

3. Procédé selon la revendication 1, **caractérisé en ce que** le matériau élastique (2) d'une découpeest connecté à celui (2) de l'autre découpe, et la zone de leur connexion est configurée comme une cavité (4) sous la forme d'une racine du nez.

4. Procédé selon la revendication 1, **caractérisé en ce que** le filet (1) est fixé sur un bob (chapeau).

5. Équipement de protectioncomprenant une pièce de filet
(1) recouvrant toute la partie faciale de la tête d'un utilisateur et d'une longueur pour enfermer le cou d'un utilisateur ; au moins une découpe dans le filet (1) sous la
forme des lentilles de lunettes (3), **caractérisé en ce qu'**il comprend en outre un matériau élastique (2) relié le long d'un bord de la découpe, un matériau élastique (2) comprenant un évidement (5)dont les dimensions doivent être suffisantes pour y insérer le bord extérieur de la lentille (3).

6. Équipement de protection selon la revendication 5, **caractérisé en ce que** le matériau élastique (2) est couplé avec le filet
(1) dans la zone de l'évidement (5), et le bord du filet (1) s'est épaissi.

7. Équipement de protection selon la revendication 5, **caractérisé en ce que** le matériau élastique (2) d'une découpe est connecté à celui (2) de l'autre découpe, et la zone de leur connexion est configurée comme une cavité
(4) sous la forme d'une racine du nez.

8. Équipement de protection selon la revendication 5, **caractérisé en ce que** le filet (1) est fixé sur un bob (chapeau).
